# EUROPÄISCHE PATENTSCHRIFT

(11) **EP 3 865 250 B1**
(45) Veröffentlichungstag und Bekanntmachung des Hinweises auf die Patenterteilung: **06.07.2022**
(21) Anmeldenummer: 20157306.0
(22) Anmeldetag: 14.02.2020
(51) Int. Cl.: B24B 23/00, A01G 3/053, B25F 5/02

(54) **HANDGEFÜHRTES BEARBEITUNGSGERÄT MIT BEDIENELEMENT UND ANZEIGEFELD**
HANDHELD TOOL WITH OPERATING ELEMENT AND DISPLAY PANEL
APPAREIL DE TRAITEMENT GUIDÉ À LA MAIN POURVU D'ÉLÉMENT DE COMMANDE ET DE CHAMP D'AFFICHAGE

(43) Veröffentlichungstag der Anmeldung: 18.08.2021
(73) Patentinhaber: Andreas Stihl AG & Co. KG, 71336 Waiblingen (DE)
(72) Erfinder: Gwosdz, Fabian, 73614 Schondorf (DE); Heinzelmann, Georg, 71364 Winnenden (DE); Trenn, Alexander, 72636 Tischardt (DE)
(74) Vertreter: Patentanwälte Ruff, Wilhelm, Beier, Dauster & Partner mbB

(56) Entgegenhaltungen:
- WO-A1-2013/032374
- DE-U1-202011 110 069

## Beschreibung

Die Erfindung bezieht sich auf ein handgeführtes Bearbeitungsgerät, das zum Gebrauch in gegeneinander um einen Kippwinkel von mindestens 45° um eine Gerätelängsachse gekippten Arbeitslagen konfiguriert ist und ein Gerätegehäuse, eine Griffbedieneinheit, die einen sich mit einer Hauptrichtungskomponente parallel zu der Gerätelängsachse erstreckenden Handgriff und ein fingerbetätigbares Bedienelement in Fingerreichweite des Handgriffs umfasst, und ein an einer Außenseite des Gerätegehäuses angeordnetes Anzeigefeld mit mindestens einem optischen Anzeigeelement aufweist.

Handgeführte Bearbeitungsgeräte dieser Art sind als insbesondere motorisch angetriebene Geräte in der Garten- und Forsttechnik, wie als Motorsägen, Heckenscheren, Laubbläser, Rasentrimmer etc., sowie im Bau- und Heimwerkerbereich als Trenn- bzw. Winkelschleifer, Stichsäge, Schleifmaschine etc. in Gebrauch. Die Geräte können im ihnen zugedachten Arbeitsbetrieb mindestens zwei unterschiedliche Arbeitslagen einnehmen, die um 45° um die Längsachse des Gerätes gegeneinander gekippt sind. So kann z.B. eine Motorsäge im Sägebetrieb wahlweise in einer vertikalen Sägeposition und in einer dagegen um 90° um die Sägelängsachse gekippten horizontalen Sägeposition und auch in Zwischenpositionen gehalten werden. Analoges gilt auch für die anderen, oben exemplarisch aufgeführten Geräte.

Über das sich in Fingerreichweite des Handgriffs befindende, fingerbetätigbare Bedienelement kann der Benutzer mit einem Finger derjenigen Hand, mit der er das Gerät an diesem Handgriff greift, eine diesem Bedienelement zugewiesene Funktion aktivieren. Bei dieser Funktion kann es sich insbesondere um eine solche handeln, die mit einem dem Bearbeitungsgerät zugedachten Arbeitszweck in Beziehung steht, wie eine Einschalt-/Ausschaltfunktion für das Gerät bzw. einen Antriebsmotor des Gerätes, der ein Bearbeitungswerkzeug des Gerätes antreibt.

Das oder die optischen Anzeigeelemente des Anzeigefeldes können jeweils gewünschten Anzeigefunktionen dienen, wobei vorzugsweise zumindest eine dieser Anzeigefunktionen mit der über das fingerbetätigbare Bedienelement auslösbaren Funktion in Beziehung steht, beispielsweise dergestalt, dass ein solches optisches Anzeigeelement dazu dient, denjenigen Zustand des Gerätes oder spezieller eines Bearbeitungswerkzeugs des Gerätes anzuzeigen, der vom Benutzer jeweils über das fingerbetätigbare Bedienelement ausgewählt ist.

Die Offenlegungsschriften US 2017/0089349 A1 und WO 2013/032374 A1 sowie die die Patentschrift US 9.555.537 B2 offenbaren Bearbeitungsgeräte dieser Art, insbesondere in Form einer Motorsäge, eines Rasentrimmers, einer Heckenschere oder eines Laubbläsers, bei denen eine oder mehrere Druckbedientasten, die der Benutzer z.B. mit dem Daumen seiner den Handgriff ergreifenden Hand betätigen kann, und mehrere Leuchtdioden(LED)-Anzeigeelemente in ein gemeinsames, kombiniertes, planes Bedien- und Anzeigepanel integriert sind, das in Gerätelängsrichtung nach vorne an einen in Gerätelängsrichtung verlaufenden Handgriff anschließt.

Bei diesen und anderen Bearbeitungsgeräten mit verschiedenen gekippten Arbeitslagen ergibt sich oftmals der Wunsch, bestimmte Gerätezustände bzw. Gerätefunktionen über das Anzeigefeld dem Benutzer optisch so anzeigen zu können, dass die betreffende Anzeige für den Benutzer nicht nur in einer, sondern in mehreren und vorzugsweise auch in um 45° oder mehr um die Gerätelängsachse gekippten Arbeitslagen des Gerätes mühelos erkennbar bleibt, z.B. ohne dass der Benutzer dazu seinen Kopf drehen braucht.

In der Offenlegungsschrift EP 2 910 342 A2 wird zu diesem Zweck bei einer Handwerkzeugmaschine, insbesondere einem Winkelschleifer, eine Anzeigeeinheit mit einem Anzeigeelement vorgeschlagen, das sich am Umfang einer Gehäuseeinheit zumindest teilumfänglich erstreckt.

In ähnlicher Weise offenbart die Patentschrift DE 43 18 980 C2 (siehe Oberbegriff des Anspruchs 1) für eine Handwerkzeugmaschine, wie eine Bohrmaschine oder einen Winkelschleifer, eine Anzeigevorrichtung mit einem als geschlossener Ring um ein Gerätegehäuse umlaufenden Lichtleiter, über dessen Umfang hinweg verteilt mehrere optische Anzeigeelemente angeordnet sind, die in Drehrichtung eines rotierenden Werkzeugs des Gerätes sukzessiv aktivierbar sind, um die Drehung des Werkzeugs anzuzeigen. Der Winkelschleifer lässt sich über einen Bedienschalter, der sich in Längsrichtung des Gerätes vor dem Lichtleiterring befindet, ein- und ausschalten und in seiner Drehrichtung verändern. Zwei weitere, punkförmige Anzeigeelemente befinden sich in Gerätelängsrichtung vor dem Bedienschalter.

Der Erfindung liegt als technisches Problem die Bereitstellung eines handgeführten Bearbeitungsgeräts der eingangs genannten Art mit insbesondere hinsichtlich der Funktionalität und/oder der Konfiguration des Anzeigefeldes und seiner Relation zum fingerbetätigbaren Bedienelement gegenüber dem oben erläuterten Stand der Technik verbesserter Charakteristik zugrunde.

Die Erfindung löst dieses Problem durch die Bereitstellung eines motorgetriebenen Bearbeitungsgeräts mit den Merkmalen des Anspruchs 1. Erfindungsgemäß ist das Anzeigefeld in einer Gehäuseumfangsrichtung um die Gerätelängsachse gegenüber dem Bedienelement versetzt angeordnet und erstreckt sich in der Gehäuseumfangsrichtung über eine Gehäusekante hinweg und/oder mit einem gebogenen oder abgeknickten Verlauf.

Diese Konfiguration und Anordnung des Anzeigefeldes erleichtert dem Benutzer das Erkennen einer jeweils vom optischen Anzeigeelement bereitgestellten Anzeige in den verschiedenen Arbeitslagen des Bearbeitungsgerätes. Dazu trägt vor allem auch bei, dass sich die Ausdehnung des Anzeigefeldes nicht auf eine plane Anzeigeebene beschränkt, sondern sich das Anzeigefeld in Umfangsrichtung des Gerätegehäuses über eine Gehäusekante hinweg erstreckt und/oder sich mit einem gebogenen oder abgeknickten Verlauf in der Gehäuseumfangsrichtung erstreckt. Auf diese Weise bleibt das Anzeigefeld für den Benutzer auch dann sichtbar, wenn er das Gerät um dessen Längsachse verkippt, um es von einer Arbeitslage in eine andere Arbeitslage zu verbringen, während er mit ihm arbeitet.

Vorteilhaft ist zudem die spezielle Positionsbeziehung des Anzeigefeldes bzgl. des fingerbetätigbaren Bedienelementes, indem das Anzeigefeld in der Gehäuseumfangsrichtung um die Gerätelängsachse gegenüber dem Bedienelement versetzt angeordnet ist. Dies erleichtert dem Benutzer eine Fingerbetätigung des Bedienelements, ohne mit dem betätigenden Finger oder der zugehörigen Hand die freie Sichtbarkeit des Anzeigefeldes für den Benutzer zu stören. Diese Konfiguration ermöglicht es zudem, dass das Anzeigefeld und das fingerbetätigbare Bedienelement nahe beieinander und in einem im Wesentlichen gleichen axialen Abstand zum Handgriff bzw. beide direkt an diesen angrenzend positioniert sein können.

In einer Weiterbildung der Erfindung weist die Griffbedieneinheit eine Fingerbedienfläche auf, in der sich das Bedienelement befindet, und das Anzeigefeld beinhaltet eine erste Anzeigefläche und eine zur ersten nichtparallele zweite Anzeigefläche. Die Fingerbedienfläche und die erste Anzeigefläche sind fluchtend aneinandergrenzend und/oder mit zueinander parallelen Flächenebenen nebeneinanderliegend angeordnet.

Dies stellt eine vorteilhafte Gestaltung des Anzeigefeldes dar. Die beiden nichtparallelen Anzeigeflächen erleichtern dem Benutzer die direkte Sichtbarkeit des Anzeigefeldes in den gekippten Arbeitslagen, z.B. durch eine direkte Sichtbarkeit der ersten Anzeigefläche in einer ersten Arbeitslage und eine direkte Sichtbarkeit der zweiten Anzeigefläche in einer gegenüber dieser ersten gekippten zweiten Arbeitslage des Gerätes. Mit seiner ersten Anzeigefläche schließt das Anzeigefeld fluchtend und/oder mit parallelen Flächenebenen an die Fingerbedienfläche an, wodurch ein gleichmäßiger Übergang zwischen diesen beiden Gerätekomponenten ohne merkliche Absätze oder Vorsprünge erzielt wird. In alternativen Ausführungen beinhaltet das Anzeigefeld nur eine einzige, plane oder gekrümmte Anzeigefläche und/oder ist mit zu einer Flächenebene der Fingerbedienfläche nicht parallelen Flächenebene oder außer Flucht mit der Fingerbedienfläche angeordnet.

In einer Ausgestaltung der Erfindung ist/sind das Anzeigefeld und/oder die Fingerbedienfläche in einem Aufnahmebereich des Gerätegehäuses außenseitig bündig oder vertieft aufgenommen. Damit wird vermieden, dass das Anzeigefeld und/oder die Fingerbedienfläche gegenüber dem angrenzenden Gerätegehäuse vorspringen und dadurch einen Absatz in der Kontur des Gerätegehäuses bildet. In alternativen Ausführungen ist das Anzeigefeld und/oder die Fingerbedienfläche gegenüber einem angrenzenden Bereich des Gerätegehäuses vorspringend angeordnet.

In einer weiteren Ausgestaltung der Erfindung umrahmt das Gerätegehäuse das Anzeigefeld und die Fingerbedienfläche im Aufnahmebereich geschlossen oder umgibt diese partiell in einem Teilumfangsbereich. Dies stellt eine gestalterisch und konstruktiv vorteilhafte Maßnahme dar. Das Anzeigefeld und die Fingerbedienfläche können durch das umrahmende oder die beiden Komponenten jedenfalls teilumfänglich umgebende Gerätegehäuse geschützt werden, z.B. vor Stößen und anderen mechanischen Einwirkungen, die zu Schädigungen führen könnten. In alternativen Ausführungen liegt das Anzeigefeld oder die Fingerbedienfläche umfangsseitig frei vom Gerätegehäuse, z.B. in Form eines vom übrigen Gerätegehäuse vorspringenden Anzeige- und/oder Bedienkörpers.

In einer Ausgestaltung der Erfindung besitzt das Bearbeitungsgerät einen in den Aufnahmebereich eingesetzten Aufnahmekörper aus einem gummielastischen Material vorgesehen, in dem das Bedienelement und/oder das Anzeigefeld eingerahmt aufgenommen ist/sind. Je nach der gewählten Realisierung lässt sich mit dem gummielastischen Material eine gute Spaltabdichtung an den Rändern des Bedienelements und/oder des Anzeigefeldes zum umgebenden Gerätegehäusebereich und/oder ein Schutz des Bedienelements und/oder des Anzeigefelds vor Stößen und anderen mechanischen Einwirkungen bereitstellen. In alternativen Ausführungen ist/sind das Bedienelement und/oder das Anzeigefeld direkt oder unter Verwendung eines Aufnahmekörpers aus einem biegesteifen Material in den Aufnahmebereich des Gerätegehäuses eingesetzt.

In einer Weiterbildung der Erfindung besitzt das Bedienelement eine Betätigungsbewegungsrichtung mit einer Richtungskomponente in der Gehäuseumfangsrichtung und/oder mit einer Richtungskomponente senkrecht zur Gehäuseumfangsrichtung und senkrecht zur Gerätelängsachse. Dies stellt eine hinsichtlich Bedienkomfort und Handhabung des Bedienelements vorteilhafte Konfiguration des Bedienelements dar. Das Bedienelement kann beispielsweise durch eine lineare Verschiebebewegung oder eine Druckbewegung senkrecht zur Gerätelängsachse oder durch eine Dreh- oder Kippbewegung um eine zur Gerätelängsachse parallele Dreh-/Kippachse betätigt werden. In alternativen Ausführungen kann das Bedienelement z.B. in einer parallel zur Gerätelängsrichtung liegenden Schiebebewegung betätigt werden.

In einer Weiterbildung der Erfindung erstreckt sich mindestens ein optisches Anzeigeelement des Anzeigefeldes in der Gehäuseumfangsrichtung über die Gehäusekante hinweg und/oder mit einem gebogenen oder abgeknickten Verlauf. Für diese Ausführung ergibt sich der Vorteil, dass für den Benutzer dieses jeweils gleiche Anzeigeelement in den verschiedenen, gegeneinander gekippten Arbeitslagen des Gerätes direkt sichtbar bleiben kann, da nicht nur das Anzeigefeld als Ganzes, sondern das oder die betreffenden Anzeigeelemente selbst gebogen oder abgeknickt bzw. über die Gehäusekante hinweg verlaufen. In alternativen Ausführungen erstrecken sich alle optischen Anzeigeelemente des Anzeigefeldes z.B. nur jeweils über einen geradlinigen Abschnitt in der Gehäuseumfangsrichtung.

In einer Weiterbildung der Erfindung beinhaltet das Anzeigefeld mindestens zwei in der Gehäuseumfangsrichtung nebeneinander angeordnete optische Anzeigeelemente und/oder mindestens zwei in der Gerätelängsrichtung nebeneinander angeordnete optische Anzeigeelemente. Dies stellt eine für viele Anwendungen günstige Ausführung des Anzeigefeldes dar, wenn dieses mit mehreren optischen Anzeigeelementen ausgerüstet sein soll.

In einer Weiterbildung der Erfindung ist das Bedienelement zur Umschaltung zwischen mehreren wählbaren Gerätebetriebszuständen eingerichtet, und mindestens ein optisches Anzeigeelement des Anzeigefeldes weist mehrere, mit den wählbaren Gerätebetriebszuständen korrespondierende Anzeigezustände auf. Dies ermöglicht dem Benutzer eine fingerbetätigbare Umschaltung des Bearbeitungsgerätes zwischen unterschiedlichen Betriebszuständen des Gerätes und eine direkte, leichte Erkennung des jeweils gewählten Betriebszustands über das Anzeigefeld. In alternativen Ausführungen kann das Bedienelement anderen Zwecken dienen, und/oder ein anderes Anzeigefeld außerhalb des Anzeigefeldes dient zum Anzeigen von Gerätebetriebszuständen.

In einer Weiterbildung der Erfindung weist das Gerätegehäuse einen Hauptgehäuseteil und einen mit dem Hauptgehäuseteil verbundenen Griffgehäuseteil auf, und das Anzeigefeld ist an einem Haltekörper gehalten, der am Hauptgehäuseteil und/oder am Griffgehäuseteil befestigt ist und an dem ein zweites, finger- oder handbetätigbares Bedienelement gehalten ist. Dies stellt eine konstruktiv vorteilhafte Realisierung des Gerätegehäuses und der Halterung des Anzeigefeldes dar. Dabei dient der das Anzeigefeld und das fingerbetätigbare Bedienelement haltende Haltekörper zusätzlich zum Halten mindestens eines weiteren Bedienelements. In alternativen Ausführungen kann das Gerätegehäuse andersartig aufgebaut sein, und/oder das Anzeigefeld und das Bedienelement sind auf andere Weise gehalten, z.B. direkt an einem Gerätegehäuseteil.

In einer Weiterbildung der Erfindung ist das Bearbeitungsgerät als eine Motorsäge mit an einer Geräteoberseite angeordnetem Handgriff konfiguriert ist, und das Anzeigefeld erstreckt sich an der Geräteoberseite und an einer rechten Geräteseite. Bei der Motorsäge kann es sich in diesem Fall insbesondere um eine solche vom sogenannten Tophandle-Typ handeln.

In einer Ausgestaltung der Erfindung ist das Bedienelement ein an der Geräteoberseite angeordnetes Druck-/Kipptastenelement. In dieser Ausführung kann der Benutzer das Bedienelement sehr einfach an der Geräteoberseite z.B. mit seinem Daumen durch eine Druck- und/oder Kippbetätigung betätigen. Insbesondere ist es in diesem Fall günstig, wenn sich das Bedienelement links vom Anzeigefeld an der Geräteoberseite befindet und der Benutzer das Gerät mit seiner rechten Hand am Handgriff greift. Denn der Daumen verdeckt dann bei dieser Betätigungsbewegung dem Benutzer nicht die freie Sicht auf das Anzeigefeld. In alternativen Ausführungen kann das Bedienelement z.B. ein berührempfindliches Touch-Bedienelement sein.

In einer anderweitigen Weiterbildung der Erfindung ist das Bearbeitungsgerät als eine Motorsäge mit an einer Geräterückseite angeordnetem Handgriff konfiguriert, und das Anzeigefeld erstreckt sich an einer Geräteoberseite und an einer linken Geräteseite. Die Motorsäge kann hierbei insbesondere eine solche vom sogenannten Rearhandle-Typ sein.

Die Eigenschaft des Anzeigefeldes, dass es sich nicht nur an der Geräteoberseite, sondern auch an der linken Geräteseite erstreckt, ist für diesen und andere Fälle günstig, bei denen die Motorsäge einen sich auf der linken Seite bogenförmig von der Oberseite zur Unterseite erstreckenden Hilfsgriff aufweist und der Benutzer die Motorsäge häufig in einer im Uhrzeigersinn um 90° verdrehten Arbeitslage einsetzt, in der sich dann die linke Seite oben befindet. Der Benutzer hat dann auch in dieser gedrehten Arbeitslage der Motorsäge einen direkten Blick auf den auf der linken Geräteseite befindlichen Teil des Anzeigefeldes. In alternativen Ausführungen erstreckt sich das Anzeigefeld z.B. an der Geräteoberseite und einer rechten Geräteseite.

In einer Ausgestaltung der Erfindung ist das Bedienelement ein an der linken Geräteseite angeordnetes Druck-/Kipptastenelement. Dies ermöglicht dem Benutzer bei diesem Motorsägentyp eine bequeme Betätigung des Bedienelements z.B. mit dem rechten Daumen sowohl in der normalen Arbeitslage mit obenliegender Geräteoberseite als auch in der um 90° um die Gerätelängsachse im Uhrzeigersinn gekippten Arbeitslage. Dabei übt der Benutzer mit dem Daumen wiederum eine geeignete Druck- und/oder Kippbetätigung auf das entsprechend ausgelegte Bedienelement aus. In alternativen Ausführungen ist das Bedienelement z.B. an der Geräteoberseite oder der rechten Geräteseite angeordnet und/oder durch einen andersartigen herkömmlichen Bedienelementtyp realisiert.

Vorteilhafte Ausführungsformen der Erfindung sind in den Zeichnungen dargestellt. Diese und weitere vorteilhafte Ausführungsformen der Erfindung werden nachfolgend näher beschrieben. Hierbei zeigen:
- Fig. 1: eine Draufsicht auf einen vorliegend interessierenden Teil einer Motorsäge vom Realhandle-Typ,
- Fig. 2: eine perspektivische Detailansicht eines Griff- und Anzeigebereichs der Motorsäge von Fig. 1,
- Fig. 3: eine perspektivische Darstellung eines Teils eines Gerätegehäuses der Motorsäge von Fig. 1 mit einem daran befestigten Haltekörper zum Halten eines Anzeigefeldes und von Bedienelementen,
- Fig. 4: eine Draufsicht auf einen Anzeige- und Bedienbereich der Motorsäge von Fig. 1,
- Fig. 5: eine Perspektivansicht des Anzeige- und Bedienbereichs von Fig. 4 losgelöst von anderen Gerätekomponenten,
- Fig. 6: eine Perspektivansicht entsprechend Fig. 2 für eine Gerätevariante mit einer modifizierten Gestaltung von Anzeigefeld und Bedienelement,
- Fig. 7: eine perspektivische Seitenansicht einer Motorsäge vom Tophandle-Typ,
- Fig. 8: eine perspektivische Detailansicht eines Bereichs VIII von Fig. 7,
- Fig. 9: eine perspektivische Draufsicht auf eine bei der Säge von Fig. 7 verwendete Anzeige- und Bedieneinheit mit weggelassenen Bedienelement und
- Fig. 10: eine Explosionsdarstellung der Anzeige- und Bedieneinheit von Fig. 9 mit Bedienelement.

In den Figuren ist ein handgeführtes Bearbeitungsgerät in Ausführungen als Motorsäge 13 vom Realhandle-Typ bzw. einer Motorsäge 15 vom Tophandle-Typ gezeigt, wobei das Bearbeitungsgerät in diesen und anderen Ausführungen zum Gebrauch in gegeneinander um einen Kippwinkel α von mindestens 45° um eine Gerätelängsachse L gekippten Arbeitslagen konfiguriert ist. Insbesondere können die Motorsägen 13, 15 im aktiven Sägebetrieb in einer normalen Arbeitslage mit in einer Vertikalebene liegender Sägekette 19 und in einer um 90° im Uhrzeigersinn um die Gerätelängsachse L gekippten Arbeitslage sowie in allen zwischenliegenden Arbeitslagen eingesetzt werden.

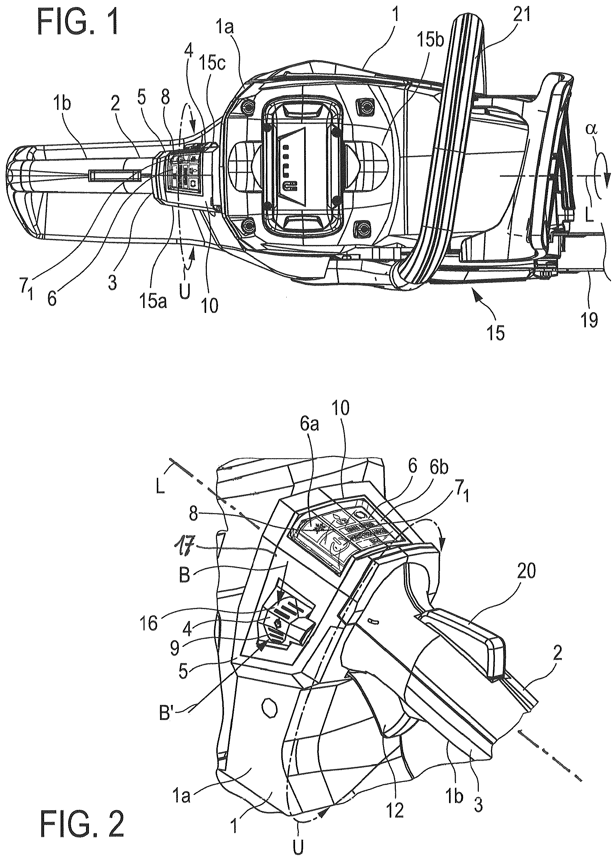

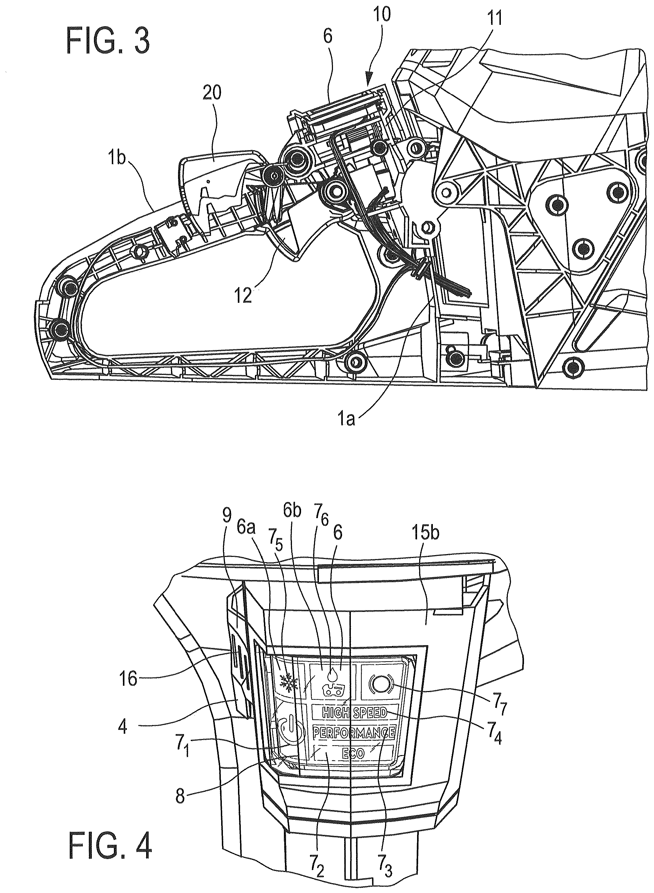

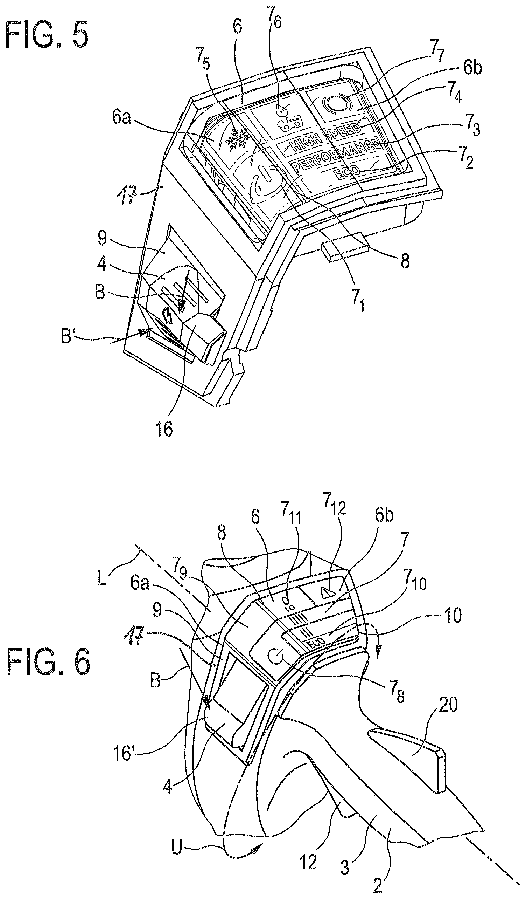

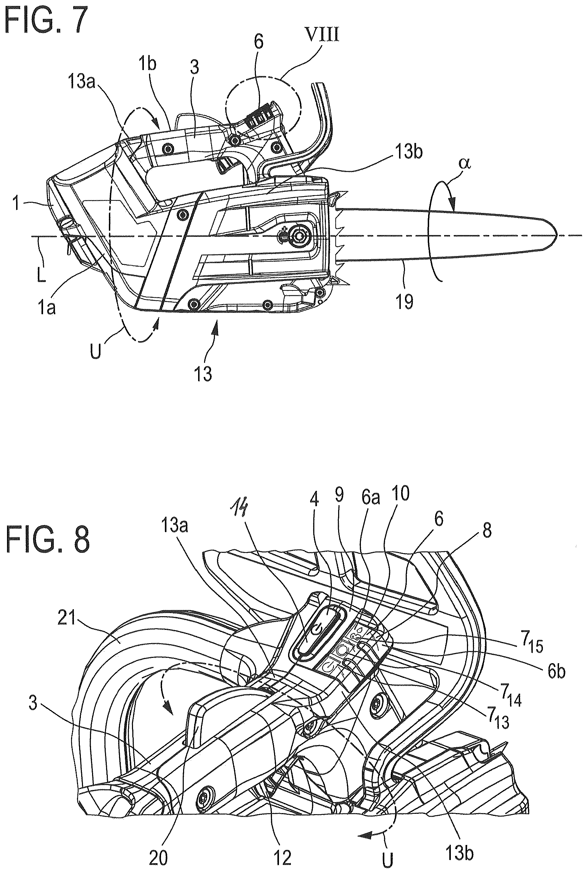

Das in diesen Realisierungen exemplarisch gezeigte Bearbeitungsgerät beinhaltet ein Gerätegehäuse 1, eine Griffbedieneinheit 2 und ein an einer Außenseite 5 des Gerätegehäuses 1 angeordnetes Anzeigefeld 6 mit mindestens einem optischen Anzeigeelement. Speziell umfasst das Anzeigefeld 6 im Ausführungsbeispiel der Fig. 1 bis 5 sieben optische Anzeigeelemente 7₁ bis 7₇, im Ausführungsbeispiel von Fig. 6 fünf Anzeigeelemente 7₈ bis 7₁₂ und im Ausführungsbeispiel der Fig. 7 bis 10 drei Anzeigeelemente 7₁₃ bis 7₁₅.

Die Griffbedieneinheit 2 umfasst einen sich mit einer Hauptrichtungskomponente parallel zu der Gerätelängsachse L erstreckenden Handgriff 3, d.h. der Handgriff 3 erstreckt sich insgesamt parallel zur Gerätelängsachse L oder weist jedenfalls eine Richtungskomponente entlang der Gerätelängsachse L größer als eine Richtungskomponente senkrecht zur Gerätelängsachse L auf. Des Weiteren beinhaltet die Griffbedieneinheit 2 ein fingerbetätigbares Bedienelement 4 in Fingerreichweite des Handgriffs 3, d.h. das Bedienelement 4 kann vom Benutzer mit einem Finger derjenigen Hand bedient bzw. betätigt werden, mit der er den Handgriff 3 umgreift.

Entsprechend dem jeweiligen Sägetyp ist bei den Motorsägen 15 der Fig. 1 bis 6 der Handgriff 3 an einer Geräterückseite 15a angeordnet, während bei der Motorsäge 13 der Fig. 7 bis 10 der Handgriff 3 an einer Geräteoberseite 13a angeordnet ist. Zusätzlich weisen die Motorsägen 13, 15 einen sich auf der linken Seite bogenförmig von der Oberseite zur Unterseite erstreckenden Hilfsgriff 21 auf, die dem Benutzer das Halten der Motorsäge 13, 15 erleichtert, wenn er diese in um die Gerätelängsachse L verdrehten Arbeitslagen einsetzt.

Das Anzeigefeld 6 ist, wie beispielsweise aus den Fig. 1, 2, 6 und 8 ersichtlich, in einer Gehäuseumfangsrichtung U um die Gerätelängsachse L gegenüber dem Bedienelement 4 versetzt angeordnet und erstreckt sich in der Gehäuseumfangsrichtung U über eine Gehäusekante 8 hinweg und/oder mit einem gebogenen oder abgeknickten Verlauf. Dabei liegt die Gehäuseumfangsrichtung U in einer Ebene senkrecht zur Gerätelängsachse L.

In vorteilhaften Ausführungen weist die Griffbedieneinheit 2, wie in den gezeigten Beispielen, eine Fingerbedienfläche 9 auf, in der sich das Bedienelement 4 befindet, und das Anzeigefeld 6 beinhaltet eine erste Anzeigefläche 6a und eine zur ersten nichtparallele zweite Anzeigefläche 6b. Dabei sind die Fingerbedienfläche 9 und die erste Anzeigefläche 6a fluchtend aneinandergrenzend angeordnet. Zusätzlich oder alternativ sind sie mit zueinander parallelen Flächenebenen nebeneinanderliegend angeordnet, in den gezeigten Beispielen ist beides realisiert.

Speziell erstreckt sich bei den Ausführungsbeispielen der Fig. 1 bis 6 die erste Anzeigefläche 6a ebenso wie das Bedienelement 4 an einer linken Geräteseite 15c der Motorsäge 15, während sich das zweite Anzeigefeld 6b an einer Geräteoberseite 15b erstreckt. Dabei schließen in der Ausführung der Fig. 1 bis 5 die erste und die zweite Anzeigefläche 6a, 6b unter einem Kipp- bzw. Bogenwinkel zwischen ca. 60° und 90° aneinander an bzw. gehen ineinander über. Bei der Variante von Fig. 6 grenzen das erste Anzeigefeld 6a und das zweite Anzeigefeld 6b unter einem Kippwinkel von ca. 30° bis 60° aneinander. In der Ausführung der Fig. 1 bis 5 schließt die Fingerbedienfläche 9 flächenparallel an die erste Anzeigefläche 6a an, in der Variante von Fig. 6 schließt die Fingerbedienfläche 9 unter einem weiteren Kippwinkel von z.B. zwischen 30° und 60° an die erste Anzeigefläche 6a fluchtend an.

Im Ausführungsbeispiel der Fig. 7 bis 10 befindet sich das erste Anzeigefeld 6a ebenso wie das Bedienelement 4 an der Geräteoberseite 13a der Motorsäge 13, während sich das zweite Anzeigefeld 6b an einer rechten Geräteseite 13b erstreckt. Dabei beträgt im gezeigten Beispiel der Knickwinkel zwischen dem ersten und dem zweiten Anzeigefeld 6a, 6b ca. 90°.

In entsprechenden Ausführungen sind nur das Anzeigefeld 6 oder nur die Fingerbedienfläche 9 oder, wie in den gezeigten Beispielen, beide Komponenten in einem Aufnahmebereich 10 des Gerätegehäuses 1 außenseitig bündig, wie in den gezeigten Beispielen, oder vertieft aufgenommen.

In entsprechenden Ausführungen umrahmt das Gerätegehäuse 1 das Anzeigefeld 6 und die Fingerbedienfläche 9 im Aufnahmebereich 10 geschlossen, wie in den Ausführungsbeispielen der Fig. 1 bis 6, oder partiell in einem Teilumfangsbereich, wie im Ausführungsbeispiel der Fig. 7 bis 10.

In vorteilhaften Ausführungsformen besitzt das Bearbeitungsgerät wie in den gezeigten Beispielen der Motorsägen 13, 15 einen in den Aufnahmebereich 10 eingesetzten Aufnahmekörper 17 aus einem gummielastischen Material. Bei den Ausführungsbeispielen der Fig. 1 bis 6 sind das Bedienelement 4 und das Anzeigefeld 6 in dem Aufnahmekörper 17 eingerahmt aufgenommen, beim Ausführungsbeispiel der Fig. 7 bis 10 ist nur das Bedienelement 4 eingerahmt aufgenommen, in nicht gezeigten Ausführungen nur das Anzeigefeld 6. Dabei grenzt im Ausführungsbeispiel der Fig. 7 bis 10 das Anzeigefeld 6 an den gummielastischen Aufnahmekörper 17 an. Der gummielastische Aufnahmekörper 17 kann jeweils eine gewünschte Spaltabdichtung am Rand des Bedienelements 4 und/oder des Anzeigefeldes 6 bereitstellen. Je nach Realisierung kann er zusätzlich oder alternativ Stoßeinwirkungen auf das Anzeigefeld 6 und/oder auf die Fingerbedienfläche 9 abfangen.

In entsprechenden Ausführungen besitzt das Bedienelement 4 eine Betätigungsbewegungsrichtung mit einer Richtungskomponente in der Gehäuseumfangsrichtung U und/oder mit einer Richtungskomponente senkrecht zur Gehäuseumfangsrichtung U und senkrecht zur Gerätelängsachse L. Im Ausführungsbeispiel der Fig. 1 bis 5 ist das Bedienelement 4 ein an der linken Geräteseite 15c angeordnetes Druck-/Kipptastenelement 16, auf das der Benutzer z.B. mit dem Daumen seiner den Handgriff 3 greifenden Hand wahlweise in einer Richtung B von schräg oben oder in einer Richtung B' von schräg unten drücken kann, wodurch sich das Bedienelement 4 um einen vorgebbaren, vorzugsweise relativ geringen Betätigungshub um eine nicht gezeigte Kippachse bzw. Drehachse verkippt bzw. dreht. Diese Kipp- /Drehbetätigungsbewegung hat in diesem Fall sowohl eine Richtungskomponente in der Gehäuseumfangsrichtung U als auch eine Richtungskomponente radial nach innen, d.h. senkrecht zur Gehäuseumfangsrichtung U und senkrecht zur Gerätelängsachse L.

In der Ausführungsvariante von Fig. 6 ist das Bedienelement 4 ein an der linken Geräteseite 15c angeordnetes Druck-/Kipptastenelement 16' nach Art eines Wippschalters, d.h. dieses Druck-/Kipptastenelement 16' kann vom Benutzer wiederum in der Richtung B von schräg oben nach unten und radial nach innen von seiner in Fig. 6 gezeigten Wippstellung in eine zweite Wippstellung betätigt werden, aus der es dann durch entsprechende Druckbetätigung auf seine andere Wippenendfläche wieder in die in Fig. 6 gezeigte Schalterposition zurückbewegt werden kann.

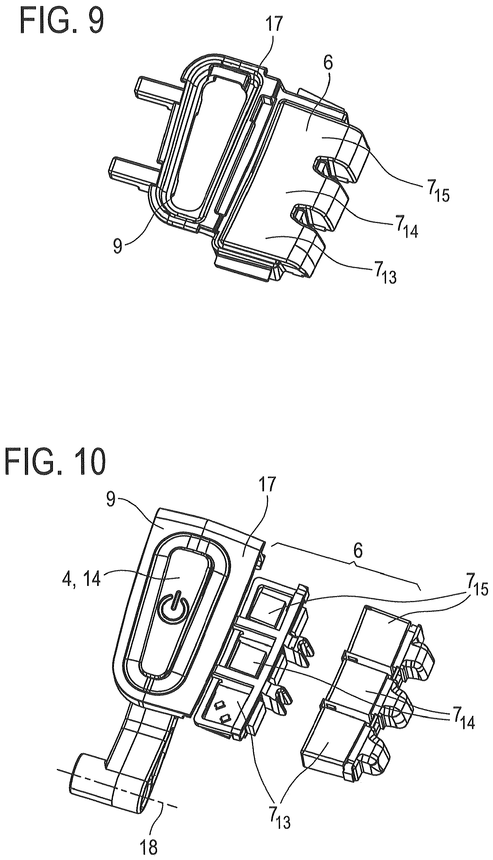

Im Ausführungsbeispiel der Fig. 7 bis 10 ist das Bedienelement 4 ein an der Geräteoberseite 13a angeordnetes Druck-/Kipptastenelement 14, das um eine in Fig. 10 gezeigte Kipp-/Drehachse 18 um einen vorgegebenen, vorzugsweise relativ geringen Bewegungshub verkippt bzw. gedreht werden kann.

In entsprechenden Ausführungsformen des Bearbeitungsgerätes erstreckt sich mindestens ein optisches Anzeigeelement des Anzeigefeldes 6 in der Gehäuseumfangsrichtung U über die Gehäusekante 8 hinweg und/oder mit einem gebogenen oder abgeknickten Verlauf. So erstrecken sich beispielsweise die Anzeigeelemente 7₁ und 7₅ im Ausführungsbeispiel der Fig. 1 bis 5 in dieser Weise über die Gehäusekante 8 hinweg mit einem abgeknickten Verlauf. Die fünf übrigen Anzeigeelemente 7₂ bis7₄, 7₆ und 7₇ befinden sich im Anzeigefeld 6 an der Geräteoberseite 15b. Im Ausführungsbeispiel von Fig. 6 erstrecken sich die Anzeigeelemente 7₈ und 7₉ in dieser Weise mit abgeknicktem Verlauf über die Gehäusekante 8 hinweg, während sich die drei übrigen Anzeigeelemente 7₁₀, 7₁₁, 7₁₂ nur an der Geräteoberseite 15b, d.h. in der zweiten Anzeigefläche 6b, erstrecken. Im Ausführungsbeispiel der Fig. 7 bis 10 erstrecken sich alle drei Anzeigeelemente 7₁₃, 7₁₄, 7₁₅ jeweils in einem um ca. 90° über die Gehäusekante 8 hinweg gebogenen bzw. abgeknickten Verlauf in der Gehäuseumfangsrichtung U sowohl in der ersten Anzeigefläche 6a an der Geräteoberseite 13a als auch in der zweiten Anzeigefläche 6b an der rechten Geräteseite 13b.

Alternativ zu einem solchen Übereck-Verlauf eines Anzeigeelements kann vorgesehen sein, zwei Anzeigeelemente synchron zu betreiben, von denen sich das eine in der ersten Anzeigefläche 6a und das andere in der zweiten Anzeigefläche 6b befindet.

In entsprechenden Ausführungen beinhaltet das Anzeigefeld 6 mindestens zwei in der Gehäuseumfangsrichtung U nebeneinander angeordnete optische Anzeigeelemente und/oder mindestens zwei in der Gerätelängsrichtung L nebeneinander angeordnete optische Anzeigeelemente. So sind im Ausführungsbeispiel der Fig. 1 bis 5 die Anzeigeelemente 7₅, 7₆, 7₇ in der Gehäuseumfangsrichtung U aufeinanderfolgend angeordnet ebenso das Anzeigeelement 7₁ und jeweils eines der Anzeigeelemente 7₂, 7₃ und 7₄. Weiter sind in diesem Beispiel die Anzeigeelemente 7₁ und 7₅ in der Gerätelängsrichtung L nebeneinander angeordnet, ebenso die Anzeigeelemente 7₂ bis 7₄ und das Anzeigeelement 7₆ bzw. das Anzeigeelement 7₇. Im Ausführungsbeispiel von Fig. 6 sind unter anderem die Anzeigeelemente 7₉, 7₁₁ und 7₁₂ in Gehäuseumfangsrichtung U nebeneinander angeordnet, und die Anzeigeelemente 7₁₀, 7₈ und je eines der Anzeigeelemente 7₁₁ und 7₁₂ sind in der Gerätelängsrichtung L nebeneinander angeordnet. Im Ausführungsbeispiel der Fig. 7 bis 10 sind die drei Anzeigeelemente 7₁₃ bis 7₁₅ in Gerätelängsrichtung L nebeneinander angeordnet.

In entsprechenden Ausführungsformen ist das Bedienelement 4 zur Umschaltung zwischen mehreren wählbaren Gerätebetriebszuständen eingerichtet. Beispielsweise kann das Bedienelement 4 in den gezeigten Ausführungen als ein Geräteaktivierungsschalter ausgeführt sein, mit dem das Gerät von einem vollständig abgeschalteten Betriebszustand in einen temporären Aktivierungszustand versetzt werden kann. Während dieses Zeitraums kann über ein oder mehrere weitere Bedienelemente das Gerät in den aktiven Betrieb versetzt werden, z.B. durch Starten eines Antriebsmotors, der die Sägekette 19 der Motorsäge 13, 15 in Rotation versetzt.

Mindestens ein optisches Anzeigeelement des Anzeigefeldes 6 weist mit diesen wählbaren Gerätebetriebszuständen korrespondierende Anzeigezustände auf. So zeigt Fig. 6 das Anzeigeelement 7₈ in einem aktiven Anzeigeleuchtzustand, mit dem in diesem Ausführungsbeispiel der erwähnte temporäre Aktivierungszustand angezeigt wird. Analog kann dieser Gerätezustand in der Ausführung der Fig. 1 bis 5 z.B. durch Aufleuchten des Anzeigeelements 7₁ und in der Ausführung der Fig. 7 bis 10 durch Aufleuchten des Anzeigeelements 7₁₃ angezeigt werden, was bedeutet, dass diese Anzeigeinformation jeweils sowohl auf der ersten Anzeigefläche 6a als auch der zweiten Anzeigefläche 6b erscheint.

In entsprechenden Ausführungsformen beinhaltet das Gerätegehäuse 1, wie in den gezeigten Beispielen, einen Hauptgehäuseteil 1a und einen mit dem Hauptgehäuseteil 1a verbundenen Griffgehäuseteil 1b, und das Anzeigefeld 6 sowie das Bedienelement 4 sind an einem Haltekörper 11 gehalten, der am Hauptgehäuseteil 1a und/oder am Griffgehäuseteil 1b befestigt ist und an dem ein zweites, finger- oder handbetätigbares Bedienelement 12 gehalten ist.

In den gezeigten Ausführungsbeispielen fungiert das zweite Bedienelement 12 als Gashebel bzw. Leistungsregler für den Antriebsmotor der Sägekette 19, wie bei Motorsägen dieser Art an sich bekannt. Des Weiteren ist bei diesen Motorsägen 13, 15 in ebenfalls an sich bekannter Weise ein drittes handbetätigbares Bedienelement 20 vorhanden, das als sogenannter Sperrhebel ausgeführt ist, wobei in den gezeigten Beispielen auch dieses dritte Bedienelement 20 vorzugsweise an dem Haltekörper 11 schwenkbeweglich gehalten ist.

Wie die gezeigten und die weiteren oben erläuterten Ausführungsbeispiele deutlich machen, stellt die Erfindung ein handgeführtes Bearbeitungsgerät zur Verfügung, bei dem in sehr vorteilhafter Weise ein fingerbetätigbares Bedienelement in Fingerreichweite des von einer Hand eines Benutzers zu greifenden Handgriffs und ein Anzeigefeld vorgesehen sind, das in einer Gehäuseumfangsrichtung um eine Gerätelängsachse gegenüber dem Bedienelement versetzt angeordnet ist und sich in Gehäuseumfangsrichtung über eine Gehäusekante hinweg und/oder mit einem gebogenen oder abgeknickten Verlauf erstreckt.

Auf diese Weise können eine oder mehrere Anzeigeinformationen an dem Anzeigefeld dergestalt optisch angezeigt werden, dass sie für den Benutzer in unterschiedlichen, um einen Kippwinkel um die Gerätelängsachse gekippten Arbeitslagen leicht einsehbar sind. Das Bearbeitungsgerät kann beispielsweise eine Motorsäge oder ein anderes Garten- oder Forstbearbeitungsgerät oder eine im Bau- und Heimwerkerbereich verwendete Handwerkzeugmaschine sein.

## Patentansprüche

1. Handgeführtes Bearbeitungsgerät, insbesondere Garten- oder Forstbearbeitungsgerät, das zum Gebrauch in gegeneinander um einen Kippwinkel (a) von mindestens 45° um eine Gerätelängsachse (L) gekippten Arbeitslagen konfiguriert ist, mit
- einem Gerätegehäuse (1),
- einer Griffbedieneinheit (2), die einen sich mit einer Hauptrichtungskomponente parallel zu der Gerätelängsachse (L) erstreckenden Handgriff (3) und ein fingerbetätigbares Bedienelement (4) in Fingerreichweite des Handgriffs (3) umfasst, und
- einem an einer Außenseite (5) des Gerätegehäuses (1) angeordneten Anzeigefeld (6) mit mindestens einem optischen Anzeigeelement (7₁),
**dadurch gekennzeichnet, dass**
- das Anzeigefeld (6) in einer Gehäuseumfangsrichtung (U) um die Gerätelängsachse (L) gegenüber dem Bedienelement (4) versetzt angeordnet ist und sich in der Gehäuseumfangsrichtung (U) über eine Gehäusekante (8) hinweg und/oder mit einem gebogenen oder abgeknickten Verlauf erstreckt.

2. Handgeführtes Bearbeitungsgerät nach Anspruch 1, weiter **dadurch gekennzeichnet, dass**
- die Griffbedieneinheit (2) eine Fingerbedienfläche (9) aufweist, in der sich das Bedienelement (4) befindet,
- das Anzeigefeld (6) eine erste Anzeigefläche (6a) und eine zur ersten nichtparallele zweite Anzeigefläche (6b) aufweist und
- die Fingerbedienfläche (9) und die erste Anzeigefläche (6a) fluchtend aneinandergrenzend und/oder mit zueinander parallelen Flächenebenen nebeneinanderliegend angeordnet sind.

3. Handgeführtes Bearbeitungsgerät nach Anspruch 2, weiter **dadurch gekennzeichnet, dass** das Anzeigefeld (6) und/oder die Fingerbedienfläche (9) in einem Aufnahmebereich (10) des Gerätegehäuses (1) außenseitig bündig oder vertieft aufgenommen ist/sind.

4. Handgeführtes Bearbeitungsgerät nach Anspruch 3, weiter **dadurch gekennzeichnet, dass** das Gerätegehäuse (1) das Anzeigefeld (6) und die Fingerbedienfläche (9) im Aufnahmebereich (10) geschlossen umrahmt oder partiell in einem Teilumfangsbereich umgibt.

5. Handgeführtes Bearbeitungsgerät nach einem der Ansprüche 2 bis 4, weiter **gekennzeichnet durch** einen in den Aufnahmebereich (10) eingesetzten Aufnahmekörper (17) aus einem gummielastischen Material, in dem das Bedienelement (4) und/oder das Anzeigefeld (6) eingerahmt aufgenommen ist/sind.

6. Handgeführtes Bearbeitungsgerät nach einem der Ansprüche 1 bis 5, weiter **dadurch gekennzeichnet, dass** das Bedienelement (4) eine Betätigungsbewegungsrichtung mit einer Richtungskomponente in der Gehäuseumfangsrichtung (U) und/oder mit einer Richtungskomponente senkrecht zur Gehäuseumfangsrichtung (U) und senkrecht zur Gerätelängsachse (L) besitzt.

7. Handgeführtes Bearbeitungsgerät nach einem der Ansprüche 1 bis 6, weiter **dadurch gekennzeichnet, dass**
- sich mindestens ein optisches Anzeigeelement (7₁) des Anzeigefeldes (6) in der Gehäuseumfangsrichtung (U) über die Gehäusekante (8) hinweg und/oder mit einem gebogenen oder abgeknickten Verlauf erstreckt und/oder
- das Anzeigefeld (6) mindestens zwei in der Gehäuseumfangsrichtung (U) nebeneinander angeordnete optische Anzeigeelemente (7₁, 7₂) und/oder mindestens zwei in der Gerätelängsrichtung (L) nebeneinander angeordnete optische Anzeigeelemente (7₁, 7₅) aufweist.

8. Handgeführtes Bearbeitungsgerät nach einem der Ansprüche 1 bis 7, weiter **dadurch gekennzeichnet, dass** das Bedienelement (4) zur Umschaltung zwischen mehreren wählbaren Gerätebetriebszuständen eingerichtet ist und mindestens ein optisches Anzeigeelement (7₁) des Anzeigefeldes (6) mehrere, mit den wählbaren Gerätebetriebszuständen korrespondierende Anzeigezustände aufweist.

9. Handgeführtes Bearbeitungsgerät nach einem der Ansprüche 1 bis 8, weiter **dadurch gekennzeichnet, dass** das Gerätegehäuse (1) einen Hauptgehäuseteil (1a) und einen mit dem Hauptgehäuseteil (1a) verbundenen Griffgehäuseteil (1b) aufweist und das Anzeigefeld (6) sowie das Bedienelement (4) an einem Haltekörper (11) gehalten ist, der am Hauptgehäuseteil (1a) und/oder am Griffgehäuseteil (1b) befestigt ist und an dem ein zweites, finger- oder handbetätigbares Bedienelement (12) gehalten ist.

10. Handgeführtes Bearbeitungsgerät nach einem der Ansprüche 1 bis 9, weiter **dadurch gekennzeichnet, dass** es als eine Motorsäge (13) mit an einer Geräteoberseite (13a) angeordnetem Handgriff (3) konfiguriert ist und sich das Anzeigefeld (6) an der Geräteoberseite (13a) und an einer rechten Geräteseite (13b) erstreckt.

11. Handgeführtes Bearbeitungsgerät nach Anspruch 10, weiter **dadurch gekennzeichnet, dass** das Bedienelement (4) ein an der Geräteoberseite (13a) angeordnetes Druck-/Kipptastenelement (14) ist.

12. Handgeführtes Bearbeitungsgerät nach einem der Ansprüche 1 bis 9, weiter **dadurch gekennzeichnet, dass** es als eine Motorsäge (15) mit an einer Geräterückseite (15a) angeordnetem Handgriff (3) konfiguriert ist und sich das Anzeigefeld (6) an einer Geräteoberseite (15b) und an einer linken Geräteseite (15c) erstreckt.

13. Handgeführtes Bearbeitungsgerät nach Anspruch 12, weiter **dadurch gekennzeichnet, dass** das Bedienelement (4) ein an der linken Geräteseite (15c) angeordnetes Druck-/Kipptastenelement (16) ist.

## Claims

1. Hand-guided treatment device, preferably gardening or forestry device, said device being configured for use in working positions tilted relative to each other by a tilt angle (α) of at least 45° about a device longitudinal axis (L), and comprising
- a device housing (1),
- a handle operating unit (2) which comprises a handle (3) extending with a main direction component parallel to the device longitudinal axis (L) and a finger-operable operating element (4) within finger reach of the handle (3), and
- a display field (6) arranged on an outside (5) of the device housing (1) and having at least one optical display element (7₁),
**characterized in that**
- the display field (6) is arranged offset relative to the operating element (4) in a housing circumferential direction (U) about the device longitudinal axis (L) and extends in the housing circumferential direction (U) over a housing edge (8) and/or with a curved or kinked course.

2. Hand-guided treatment device according to Claim 1, further **characterized in that**
- the handle operating unit (2) has a finger operating surface area (9) in which the operating element (4) is situated,
- the display field (6) contains a first display surface area (6a) and a second display surface area (6b) non-parallel to the first, and
- the finger operating surface area (9) and the first display surface area (6a) are arranged aligned adjacent to each other and/or next to each other with mutually parallel face planes.

3. Hand-guided treatment device according to Claim 2, further **characterized in that** the display field (6) and/or the finger operating surface area (9) is/are received outwardly flush or recessed in a receiving region (10) of the device housing (1).

4. Hand-guided treatment device according to Claim 3, further **characterized in that** the device housing (1) forms a closed frame around the display field (6) and the finger operating surface area (9) in the receiving region (10) or partially surrounds these in a partial peripheral region.

5. Hand-guided treatment device according to any of Claims 2 to 4, further **characterized by** a receiving body (17) of rubber-elastic material inserted in the receiving region (10), in which the operating element (4) and/or the display field (6) is/are received and framed.

6. Hand-guided treatment device according to any of Claims 1 to 5, further **characterized in that** the operating element (4) has an actuation movement direction with a direction component in the housing circumferential direction (U) and/or with a direction component perpendicular to the housing circumferential direction (U) and perpendicular to the device longitudinal axis (L).

7. Hand-guided treatment device according to any of Claims 1 to 6, further **characterized in that**
- at least one optical display element (7₁) of the display field (6) extends in the housing circumferential direction (U) over the housing edge (8) and/or with a curved or kinked course, and/or
- the display field (6) has at least two optical display elements (7₁, 7₂) arranged next to each other in the housing circumferential direction (U) and/or at least two optical display elements (7₁, 7₅) arranged next to each other in the device longitudinal direction (L).

8. Hand-guided treatment device according to any of Claims 1 to 7, further **characterized in that** the operating element (4) is configured for switching between a plurality of selectable device operating states, and at least one optical display element (7₁) of the display field (6) comprises a plurality of display states corresponding to the selectable device operating states.

9. Hand-guided treatment device according to any of Claims 1 to 8, further **characterized in that** the device housing (1) has a main housing part (1a) and a handle housing part (1b) connected to the main housing part (1a), and the display field (6) and the operating element (4) are held on a retaining body (11) which is attached to the main housing part (1a) and/or to the handle housing part (1b) and on which a second finger- or hand-actuatable operating element (12) is held.

10. Hand-guided treatment device according to any of Claims 1 to 9, further **characterized in that** it is configured as a power saw (13) with a handle (3) arranged on a device top side (13a) and the display field (6) extends on the device top side (13a) and on a right display side (13b).

11. Hand-guided treatment device according to Claim 10, further **characterized in that** the operating element (4) is a push/tilt button element (14) arranged on the device top side (13a).

12. Hand-guided treatment device according to any of Claims 1 to 9, further **characterized in that** it is configured as a power saw (15) with a handle (3) arranged on a device rear side (15a) and the display field (6) extends on a device top side (15b) and a left device side (15c).

13. Hand-guided treatment device according to Claim 12, further **characterized in that** the operating element (4) is a push/tilt button element (16) arranged on the left device side (15c).

## Revendications

1. Appareil de traitement à guidage manuel, en particulier appareil de traitement de jardinage ou de sylviculture, qui est configuré pour être utilisé dans des positions de travail inclinées les unes par rapport aux autres d'un angle d'inclinaison (α) d'au moins 45° autour d'un axe longitudinal d'appareil (L), comprenant
- un boîtier d'appareil (1),
- une unité de commande de poignée (2) qui comprend une poignée (3) s'étendant avec une composante de direction principale en parallèle à l'axe longitudinal d'appareil (L) et un élément de commande (4) pouvant être actionné avec les doigts à portée des doigts de la poignée (3), et
- un champ d'affichage (6) disposé sur une face extérieure (5) du boîtier d'appareil (1) avec au moins un élément d'affichage optique (7₁),
**caractérisé en ce que**
- le champ d'affichage (6) est disposé dans la direction circonférentielle de boîtier (U) avec un décalage autour de l'axe longitudinal d'appareil (L) par rapport à l'élément de commande (4) et s'étend dans la direction circonférentielle de boîtier (U) au-delà d'un bord de boîtier (8) et/ou avec un tracé courbe ou coudé.

2. Appareil de traitement à guidage manuel selon la revendication 1, en outre **caractérisé en ce que**
- l'unité de commande de poignée (2) présente une surface de commande avec les doigts (9) sur laquelle se trouve l'élément de commande (4),
- le champ d'affichage (6) présente une première surface d'affichage (6a) et une deuxième surface d'affichage (6b) non parallèle à la première, et
- la surface de commande avec les doigts (9) et la première surface d'affichage (6a) sont disposées de manière contiguë en alignement et/ou de manière adjacente avec des plans de surface parallèles l'un à l'autre.

3. Appareil de traitement à guidage manuel selon la revendication 2, en outre **caractérisé en ce que** le champ d'affichage (6) et/ou la surface de commande avec les doigts (9) sont logés en affleurement ou en creux dans une zone de logement (10) du boîtier d'appareil (1) sur la face extérieure.

4. Appareil de traitement à guidage manuel selon la revendication 3, en outre **caractérisé en ce que** le boîtier d'appareil (1) encadre complètement le champ d'affichage (6) et la surface de commande avec les doigts (9) dans la zone de logement (10) ou l'entoure partiellement dans une zone circonférentielle partielle.

5. Appareil de traitement à guidage manuel selon l'une quelconque des revendications 2 à 4, en outre **caractérisé par** un corps de logement (17), placé dans la zone de logement (10), en matériau élastique dans lequel l'élément de commande (4) et/ou le champ d'affichage (6) sont logés en étant encadrés.

6. Appareil de traitement à guidage manuel selon l'une quelconque des revendications 1 à 5, en outre **caractérisé en ce que** l'élément de commande (4) possède une direction de mouvement d'actionnement ayant une composante directionnelle dans la direction circonférentielle d'actionnement (U) et/ou une composante directionnelle perpendiculaire à la direction circonférentielle de boîtier (U) et perpendiculaire à l'axe longitudinal de boîtier (L).

7. Appareil de traitement à guidage manuel selon l'une quelconque des revendications 1 à 6, en outre **caractérisé en ce que**
- au moins un élément d'affichage optique (7₁) du champ d'affichage (6) s'étend dans la direction circonférentielle de boîtier (U) au-delà du bord de boîtier (8) et/ou avec tracé courbe ou coudé, et/ou
- le champ d'affichage (6) présente au moins deux éléments d'affichage optiques (7₁, 7₂) disposés côte à côte dans la direction circonférentielle de boîtier (U) et/ou au moins deux éléments d'affichage optiques (7₁, 7₅) disposés côte à côte dans la direction longitudinal d'appareil (L).

8. Appareil de traitement à guidage manuel selon l'une quelconque des revendications 1 à 7, en outre **caractérisé en ce que** l'élément de commande (4) est conçu pour commuter entre plusieurs états de fonctionnement d'appareil sélectionnables, et au moins un élément d'affichage optique (7₁) du champ d'affichage (6) présente plusieurs états d'affichage correspondant aux états de fonctionnement d'appareil sélectionnables.

9. Appareil de traitement à guidage manuel selon l'une quelconque des revendications 1 à 8, en outre **caractérisé en ce que** le boîtier d'appareil (1) présente une partie de boîtier principale (1a) et une partie de boîtier de poignée (1b) reliée à la partie de boîtier principale (1a), et le champ d'affichage (6) ainsi que l'élément de commande (4) sont maintenus au niveau d'un corps de maintien (11) qui est fixé à la partie de boîtier principale (1a) et/ou à la partie de boîtier de poignée (1b) et au niveau duquel est maintenu un deuxième élément de commande (12) pouvant être actionné avec les doigts ou la main.

10. Appareil de traitement à guidage manuel selon l'une quelconque des revendications 1 à 9, en outre **caractérisé en ce qu'**il est configuré comme une scie à moteur (13) pourvue d'une poignée (3) disposée sur une face d'appareil supérieure (13a), et le champ d'affichage (6) s'étend sur la face d'appareil supérieure (13a) et sur une face d'appareil droite (13b).

11. Appareil de traitement à guidage manuel selon la revendication 10, en outre **caractérisé en ce que** l'élément de commande (4) est un élément à bouton-poussoir/bouton basculant (14) disposé sur la face d'appareil supérieure (13a).

12. Appareil de traitement à guidage manuel selon l'une quelconque des revendications 1 à 9, en outre **caractérisé en ce qu'**il est configuré comme une scie à moteur (15) pourvue d'une poignée (3) disposée sur une face d'appareil arrière (15a), et le champ d'affichage (6) s'étend sur une face d'appareil supérieure (15b) et sur une face d'appareil gauche (15c).

13. Appareil de traitement à guidage manuel selon la revendication 12, en outre **caractérisé en ce que** l'élément de commande (4) est un élément à bouton-poussoir/bouton basculant (16) disposé sur la face d'appareil gauche (15c).
